# EUROPEAN PATENT APPLICATION

(11) **EP 4 650 381 A1**
(43) Date of publication of application: **19.11.2025**
(21) Application number: 24176240.0
(22) Date of filing: 16.05.2024
(51) Int. Cl.: C08G 63/08, C08G 63/78

(54) **A FLEXIBLE AND ECONOMICAL PROCESS AND PLANT FOR PRODUCING POLYLACTIC ACID**

(71) Applicant: Sulzer Management AG, 8401 Winterthur (CH)
(72) Inventor: YU, Yingchuan, 8049 Zürich (CH); KIRSCHNER, Christoph, 8484 Weisslingen (CH); BATTÙ, Alex, 9548 Matzingen (CH); SHERSHNEV, Oleg, 8401 Winterthur (CH)
(74) Representative: IPS Irsch AG

(57) **Abstract**

A process of producing polylactic acid from lactic acid comprises the steps of:
a) synthesizing in a lactide synthesis reactor a crude lactide composition comprising at least meso-lactide and L-lactide from a crude lactic acid composition,
b) separating from the crude lactide composition in at least one distillation column a meso-lactide enriched composition and a L-lactide enriched composition,
c) subjecting the meso-lactide enriched composition in a first crystallization unit to a purification comprising at least one crystallization step so as to produce a purified meso-lactide enriched composition, wherein the first crystallizer unit comprises two or more parallel crystallizers,
d) subjecting the L-lactide enriched composition in a second crystallization unit to a purification comprising at least one crystallization step so as to produce a purified L-lactide enriched composition,
e) polymerizing in a polymerization reactor unit a polymerization composition comprising at least a portion of the L-lactide enriched composition obtained in step d) to a crude polylactic acid composition, and
f) withdrawing at least one purge stream from at least one of the lactide synthesis reactor, of the at least one distillation column, of the first crystallization unit and of the second crystallization unit, wherein the at least one purge stream is subjected in a third crystallization unit to at least one crystallization step so as to produce a purified purge stream.

## Description

The present invention relates to a process and to a plant for producing and particularly for continuously producing polylactic acid from lactic acid.

Polymers of lactic acid or polylactic acids, respectively, are of particular interest, because they can be obtained from renewable resources and are mostly compostable and/or biodegradable. Moreover, the technological and physiochemical properties of these polymers come quite close to the properties of those polymers derived from fossil-based resources, which explains why these polymers are regarded as highly promising substitutes for the latter. Furthermore, polymers of lactic acid have a wide range of applications. For instance, polylactic acid is used in the biomedical field in surgical implants, such as heart stent and wound sutures, in films, such as mulch film, in packagings and fibers, such as food packages, garments, nonwoven hygienic articles, carpets and disposable plastic products, such as e.g. disposable cutlery or containers. In addition, polylactic acid has found wide application in composite materials, such as in fiber-reinforced plastics.

Generally, two alternative principal methods are known for synthesizing polylactic acid. The first principal method is the direct polycondensation of lactic acid to polylactic acid. However, this principal method only leads to low molecular weight polymers and is thus limited to specific polymers.

The second principal method known for synthesizing polylactic acid is the ring-opening-polymerization of lactide, which is the cyclic diester of lactic acid. This method is nowadays the preferred method for the industrial production of polylactic acid. The lactide is usually produced from lactic acid - which is mostly prepared by fermentation of carbohydrates from biomass, such as starch, sugar or corn resulting in lactic acid, - by first oligomerizing lactic acid to oligomers of lactic acid and then subjecting the oligomers to a depolymerization reaction or cyclization reaction, respectively. The so obtained crude lactide contains the lactide and impurities, such as lactic acid, lactic acid oligomers and other impurities, and is usually purified, before the purified lactide is then polymerized in the presence of a catalyst and optionally an initiator to form a crude polylactic acid composition, such as a crude high molecular weight polylactic acid composition. After the polymerization, the unreacted lactide has to be removed from the crude polylactic acid composition to a final concentration of less than at least 0.5% by weight, in order to obtain a product of marketable quality. The removal of unreacted lactide as well as of other low-boiling components of the crude polylactic acid composition is usually done by devolatilization. More specifically, the crude polylactic acid composition is subjected to one or more devolatilization steps, which are conducted at an elevated temperature and at a reduced pressure. During the devolatilization, the unreacted lactide as well as other low-boiling components are removed as vapor fraction from the polylactic acid so as to obtain a vapor composition including the unreacted lactide and a liquid fraction including purified polylactic acid melt, which may be further purified, for instance by crystallization.

Lactic acid is chiral and exists in the form of L-lactic acid and D- lactic acid, which are also called S-lactic acid and R-lactic acid, respectively. Therefore, the cyclic dimer of lactic acid, i.e. lactide, exists in the form of three stereoisomers, namely as L-lactide (or S,S-lactide, respectively), as D-lactide (or R,R-lactide, respectively) and as meso-lactide (or S,R-lactide, respectively). The properties of the polylactic acid, such as the processing properties, crystallization properties and degradation behavior of polylactic acid, depend on the structure and composition of the polymer chains. The stereochemical structure of polylactic acid can be modified by copolymerization of mixtures of L-lactide, meso-lactide and D-lactide resulting in high molecular weight amorphous or semicrystalline polymers with a melting point in the range from 130 to 185°C. Furthermore, homopolymers may be produced consisting only of L-lactic acid or of D-lactic acid monomers. For instance, isotactic polylactic acid homopolymer, which comprises only L-lactic acid monomer, is a semicrystalline material with a highest melting point, whereas polylactic acid copolymers comprising L-lactic acid and D-lactic acid monomers with a comparable high D-stereoisomer content exhibit lower melting points and slower crystallization behavior. Therefore, processes are desirable, in which polylactic acid with a predetermined stereoisomeric structure may be easily and reliably produced from lactide.

One challenge in the production of polylactic acid from lactic acid is the varying quality of the raw lactic acid composition. As set out above, lactic acid is usually produced by fermentation of carbohydrates from biomass and therefore different lactic acid charges usually have a different quality and a different composition. More specifically, the content of L-lactic acid and of D-lactic acid as well as the chemical nature and the amount of impurities, such as lactic acid oligomers, inorganic sulfate compounds, heavy metals, various kinds of free acids and various kinds of alkalis, vary between different raw lactic acid compositions. For instance, these variations influence the content of meso-lactide in the lactide composition being obtained from the respective raw lactic acid composition from virtually no meso-lactide, such as 2% by weight or less, to a comparable high content of up to 15% by weight of meso-lactide, because the impurities being contained in the raw lactic acid composition tend to have a large impact on the lactide synthesis from the raw lactic acid composition, e.g. the racemization, oxidation, aldehydation and others. Such variations of the meso-lactide content in the lactide composition may have a significant impact on the polylactic acid quality. Apart from variations in the meso-lactide content in the lactide composition synthesized from the raw lactic acid composition, the impurities being contained in the raw lactic acid composition may further lead to a high yellowness of the polylactic acid product, which is disadvantageous. In fact, a low yellowness is one of the most important product properties in the polymer industry. Typically, the undesired yellow color is generated during the polymerization of the lactide to polylactic acid due to the presence of impurities in the corresponding polymerization composition. Furthermore, such impurities usually result in unwanted side reactions. Other drawbacks of the known processes for producing polylactic acid from lactic acid are comparable high operational costs and comparable high capital expenditures. Finally, the known processes for producing polylactic acid from lactic acid lead to a comparable high amount of waste.

In view of this, the object underlying the present invention is to provide a process for producing polylactic acid, which is flexible concerning the quality of the starting crude lactic acid composition, i.e. which leads - independently from the composition and quality of the starting crude lactic acid - in a high yield to polylactic acid of high quality and of a desired stereochemical structure, wherein the process is further characterized by low capital expenditures and low operational costs as well as by the production of comparable low amounts of waste.

In accordance with the present invention, this object is solved by providing a process of producing polylactic acid from lactic acid comprising the steps of:
a) synthesizing in a lactide synthesis reactor a crude lactide composition comprising at least meso-lactide and L-lactide from a crude lactic acid composition,
b) separating from the crude lactide composition in at least one distillation column a meso-lactide enriched composition and a L-lactide enriched composition,
c) subjecting the meso-lactide enriched composition in a first crystallization unit to a purification comprising at least one crystallization step so as to produce a purified meso-lactide enriched composition, wherein the first crystallizer unit comprises two or more parallel crystallizers,
d) subjecting the L-lactide enriched composition in a second crystallization unit to a purification comprising at least one crystallization step so as to produce a purified L-lactide enriched composition,
e) polymerizing in a polymerization reactor unit a polymerization composition comprising at least a portion of the L-lactide enriched composition obtained in step d) to a crude polylactic acid composition, and
f) withdrawing at least one purge stream from at least one of the lactide synthesis reactor, of the at least one distillation column, of the first crystallization unit and of the second crystallization unit, wherein the at least one purge stream is subjected in a third crystallization unit to at least one crystallization step so as to produce a purified purge stream.

By the aforementioned process not only polylactic acid with a particularly high stereochemical purity with a predetermined ratio of the lactic acid stereoisomers and with a particularly high compositional purity leading to a particular low yellowness of less than 5 may be produced, but the process is also flexible concerning the composition and quality of the crude lactic acid composition, i.e. concerning the chemical nature and amounts of impurities in the crude lactic acid composition. The latter is in particular due to the fact that the meso-lactide enriched composition is subjected in the first crystallization unit to a purification, wherein the first crystallizer unit comprises two or more parallel crystallizers. By having two or more parallel crystallizers for purifying the meso-lactide enriched composition, the process is virtually independent from the varying content of meso-lactide in the crude lactide composition being obtained during the lactide synthesis from the crude lactic acid composition. If the respective content of meso-lactide in the synthesized crude lactide composition is low, such as 1.5% by weight, the meso-lactide enriched composition may be purified during step c) in only one of the at least two parallel crystallizers, whereas in the case of a comparable high content of meso-lactide in the synthesized lactide composition, such as 10% by weight or even 15% by weight, the meso-lactide enriched composition may be distributed over more than one of the at least two parallel crystallizers, such as over three or four parallel crystallizers. Thereby, it is assured that the meso-lactide is purified within a short term to a desired optimal degree, independent from the quality of the crude lactic acid composition. In contrast to this, if only one crystallizer is used, this must be sized so that it may process the maximum possible amount of meso-lactide, which may result from the lactide synthesis depending on the quality of the crude lactic acid composition. This may result in the case of a low quantity production of meso-lactide during the lactide synthesis from the crude lactic acid composition in a quite long time period required to collect enough meso-lactide enriched composition from the separation/distillation step b), before the crystallization in the first crystallization unit in step c) may start. Since the distilled meso-lactide is not stable due to its chemical properties, this leads to deteriorated purified meso-lactide, which negatively impacts the quality of the polylactic acid produced therefrom. Thus, the two or more parallel crystallizers in the first crystallization unit lead to a great operational flexibility according to the varied capacity and/or varied feed quality of the crude meso-lactide composition. In addition, step f) of withdrawing at least one purge stream from at least one of the lactide synthesis reactor, of the at least one distillation column, of the first crystallization unit and of the second crystallization unit, wherein the at least one purge stream is subjected in a third crystallization unit to at least one crystallization step so as to produce a purified purge stream, allows a significant reduction of the waste of the process. More specifically, the purification of the purge stream(s) in the third crystallization unit purifies the purge stream(s) and thus allows to at least partially reuse the purge stream(s), which contain(s) significant amounts of lactide and in particular of L-lactide, in the process, for instance by recycling them to the second crystallization unit of step d) and/or by recycling them to the polymerization reactor unit used in step e). This does not only reduce the amount of waste, but also increases the yield of the process and leads to a reduction of the operational costs as well as of the capital expenditures. In contrast thereto, in the prior art processes such necessary purge streams are withdrawn from the process without any purification. All in all, the process of producing polylactic acid in accordance with the present invention is flexible concerning the quality of the crude (starting) lactic acid composition, i.e. leads - independently from the composition and quality of the crude lactic acid composition - in a high yield to polylactic acid of high quality and of a desired stereochemical structure, wherein the process is further characterized by low capital expenditures and low operational costs as well as by the production of comparable low amounts of waste.

Crystallization unit means in accordance with the present invention at least one crystallizer. Thus, in the simplest case the crystallization unit is nothing more than a crystallizer, whereas a crystallization unit may contain two or more crystallizers.

In turn, two or more parallel crystallizers mean in accordance with the present invention two or more crystallizers, each of which comprising at least one inlet line for feed and at least one outlet line, wherein the inlet lines of all parallel crystallizers are connected with each other to a central inlet line, and wherein preferably the outlet lines of all parallel crystallizers are connected with each other to a central outlet line.

Furthermore, meso-lactide enriched composition means in accordance with the present invention that the respective composition produced during the separation step b) has a higher content of meso-lactide and a lower content of L-lactide than the crude lactide composition fed into the separation step b). Analogously thereto, L-lactide enriched composition means in accordance with the present invention that the respective composition produced during the separation step b) has a higher content of L-lactide and a lower content of meso-lactide than the crude lactide composition fed into the separation step b).

In accordance with the present invention, in step f) of the process at least one purge stream is subjected in a third crystallization unit to at least one crystallization step so as to produce a purified purge stream. The purge stream(s) comprise a comparable high amount of L-lactide and a significant amount of meso-lactide. In order to achieve a particular efficient purification of the lactide containing purge streams, it is particularly preferred when the at least one purge stream is subjected in step f) to at least one eutectic crystallization step. Thereby, not only the L-lactide may be efficiently and in high yield recovered from the at least one purge stream, but also the meso-lactide. Eutectic crystallization means that the crystallization comprises the crystallization of an eutectic mixture of L-lactide and meso-lactide and possibly D-lactide at the eutectic point. The eutectic mixture of L-lactide and meso-lactide comprises about 35% by weight of L-lactide and about 65% by weight of meso-lactide. Since the purge stream(s) will usually contain more L-lactide and less meso-lactide than the eutectic mixture, the eutectic crystallization comprises in this case at least two crystallization steps, namely a first crystallization step, in which so much of the component being contained in the purge stream(s) in a higher content than its content in the eutectic mixture is removed from the purge stream(s), until the eutectic mixture is obtained, which is then in a second step crystallized under the eutectic crystallization conditions.

Good results are in the aforementioned embodiment in particular obtained, when the at least one crystallization step in the third crystallization unit is performed at a crystallization temperature of 0 to 150°C and more preferably of 0 to 120°C with a ramping rate of less than 1°C/min., preferably of less than 0.1 °C/min. and more preferably less of than 0.05°C/min.

In a further particular preferred embodiment of the present invention, the at least one purge stream is subjected in step f) to at least one static crystallization step, such as to one to four and preferably to two to four static crystallization steps. Static crystallization leads to an efficient recovery of lactide at low operational costs. Preferably, the at least one crystallization step is a melt crystallization step, i.e. a crystallization step, which is performed from the liquid purge stream without addition of further components, such as for examples solvents.

Preferably, step f) comprises at least one static (melt) eutectic crystallization step, such as one to four and more preferably two to four static(melt) eutectic crystallization steps.

In accordance with the present invention, in step f) of the process at least one purge stream is withdrawn from at least one of the group consisting of the lactide synthesis reactor, of the at least one distillation column, of the first crystallization unit and of the second crystallization unit, before the at least one purge stream is subjected in the third crystallization unit to at least one crystallization step so as to produce a purified purge stream. In view of the yield of the process and the minimization of the amount of waste, it is more preferred that in step f) purge streams from at least two members of the aforementioned group, even more preferred purge streams from at least three members of the aforementioned group and most preferably purge streams from all members of the aforementioned group - i.e. from the lactide synthesis reactor as well as from the at least one distillation column as well as from the first crystallization unit as well as from the second crystallization unit - are withdrawn and purified in the third crystallization unit so as to produce a purified purge stream. If purge streams from more than one member of the aforementioned group are withdrawn, preferably all of the withdrawn purge streams are combined to one purge stream, before this one purge stream is fed into the third crystallization unit.

In order to re-use the lactide being recovered in the third crystallization unit in the process so as to increase the yield of the process, it is suggested in a further development of the idea of the present invention that at least a portion of the purified purge stream is recycled into the at least one distillation column.

Good results are in particular obtained, when at least 50% by weight, more preferably at least 80% by weight and most preferably at least 100% by weight of the purified purge stream are recycled into the at least one distillation column of step b). The mother liquor being obtained in the third crystallization unit and optionally a portion of the purified purge stream is/are withdrawn from the process as purge or waste, respectively.

The present invention is not particularly limited concerning the kind of synthesizing the crude lactide composition comprising at least meso-lactide and L-lactide in step a) from the crude lactic acid composition in the lactide synthesis reactor. Good results are in particular obtained, when step a) comprises the sub-steps of oligomerizing or pre-polymerizing, respectively, a crude lactic acid composition so as to produce a lactic acid oligomer composition and then of subjecting the lactic acid oligomer composition in the lactide synthesis reactor to a depolymerization reaction so as to obtain the crude lactide composition. For instance, the crude lactic acid composition, which is subjected to the oligomerizing sub-step, is an aqueous lactic acid composition, which contains more than 70% by weight, more preferably more than 80% by weight and most preferably more than 90% by weight of lactic acid, with the remainder being water and impurities. More specifically, it is preferred that the lactic acid part of the crude lactic acid composition (i.e. without the content of water and other impurities) comprises 97 to 100% by weight of L-lactic acid and 0 to 3% by weight of D-lactic acid and more preferably 99.5 to 100% by weight of L-lactic acid and 0 to 0.5% by weight of D-lactic acid. It is particularly preferred that the crude lactic acid composition is an aqueous lactic acid composition, which contains 80 to 92% by weight of L-lactid acid based on the total weight of the crude lactic acid composition.

In order to increase the efficiency of the oligomerization step, it is proposed in a further development of the idea of the present invention to first dewater the crude lactic acid composition, before the dewatered lactic acid composition is subjected to the oligomerization reaction. For instance, the dewatering is performed as flash dewatering process. For this purpose, the crude lactic acid composition may be first heated to a moderate temperature of e.g. 40 to 150°C, before the heated composition is separated in a distillation column being operated under medium-level vacuum, such as 5 to 10 kPa, into a bottom composition being enriched in water and into an overheads composition being enriched in lactide. The overheads composition is then condensed and subjected to the oligomerization sub-step.

The oligomerization reaction is preferably performed at a temperature of 150 to 200°C and at a pressure of 2 to 40 kPa. By controlling the process conditions, i.e. pressure, temperature and water removal rate, the desired chain length of PLA oligomers can be targeted. Good results are in particular obtained, when the oligomerization reaction of step b) is performed in two or more, such as three, subsequent tower reactors operating at different pressures (vacuums) and temperatures so as to allow a proper control of the oligomerization reaction kinetics as well as thermodynamics.

The so obtained oligomer composition is the subjected to the depolymerization sub-step or cyclization sub-step, respectively, in order to obtain the crude lactide composition. Preferably, the depolymerization reaction is performed in the lactide synthesis reactor at a temperature of 190 to 250°C and at a pressure below 10 mbar. The depolymerization reaction of the lactic acid oligomer to lactide is an equilibrium reaction. In order to push the reaction towards the lactide, lactide is preferably withdrawn from the system by evaporation under vacuum. The lactide synthesis reactor is preferably a container comprising internals, auch as structured packings, liquid distributors, demisters etc., in which the synthesis mainly takes place in the sump of the container, but also in other sections where lactide composition is not in equilibrium with lactic acid oligomers. The lactide synthesis reactor produces a crude lactide composition, which contains the lactide and lactic acid, lactic acid oligomers and other impurities.

Usually, the crude lactide composition will be obtained as vapor phase, why it is preferred that the crude lactide composition is condensed in one or more condensers, preferably in a condensation column or in a scrubber, before it is subjected to separation step b). Such a condensation column is preferably equipped with structure packings and circulated with liquid lactide, which has been precondition to an appropriate temperature so that it can fully condense the upcoming lactide vapor.

Thereafter, the crude lactide composition is separated in step b) in at least one distillation column into a meso-lactide enriched composition and into a L-lactide enriched composition. Preferably, step b) comprises one or more distillation steps, wherein each of these distillation steps is performed in a distillation column, wherein the crude lactide composition is fed into the distillation column of the first distillation step, if more than one distillation steps are comprised, or into the distillation column of the one distillation step, if only one distillation steps is comprised. The meso-lactide enriched composition is produced as overheads fraction and the L-lactide enriched composition is produced as bottom fraction or side fraction of the distillation column of the last distillation step, if more than one distillation steps are comprised, or of the distillation column of the one distillation step, if only one distillation step is comprised.

In accordance with one preferred embodiment of the present invention, step b) comprises only one distillation step, i.e. step b) is performed with only one distillation column. The crude lactide composition is fed into the distillation column, wherein the meso-lactide enriched composition is withdrawn from the distillation column as overheads fraction and the L-lactide enriched composition is withdrawn from the distillation column as side or bottom fraction. More preferably, the L-lactide enriched composition is withdrawn from the distillation column as side fraction, whereas the bottom fraction is preferably led as purge stream into the third crystallization unit of step d) and/or recycled into the lactide synthesis reactor.

The distillation column comprises at least one structured packing bed, preferably 2 to 6 structured packing beds and more preferably 3 to 4 structured packing beds, wherein the L-lactide enriched composition is preferably withdrawn from the distillation column as side fraction between the third and fourth bed, seen from the top to the bottom of the distillation column. Furthermore, it is preferred that the distillation column is connected with a condenser and a reboiler. While the condenser is connected with the overheads outlet for the overheads fraction of the distillation column and comprises one outlet for liquid, from which a recycle line leads back into the upper part of the distillation column for refluxing a portion of the condensed overheads fraction into the upper part of the distillation column, the reboiler is connected with the bottom outlet for the bottom fraction of the distillation column and comprises one outlet for vapor, from which a recycle line leads back into the lower part of the distillation column for refluxing a portion of the bottom fraction having been evaporated in the reboiler into the lower part of the distillation column. This embodiment is particularly suitable, if the crude lactide composition contains comparable low amounts of oligomers, such as lactic acid oligomers, for instance if the crude lactide composition contains at most 3% by weight of oligomers or preferably at most 1% by weight of oligomers.

In a further development of the idea of the present invention it is suggested that step b) comprises two or distillation steps and more preferably two distillation steps, i.e. step b) is performed with two or more subsequent distillation columns and more preferably with two subsequent distillation columns. The crude lactide composition is led in this embodiment in step b) into a first distillation column, in which the crude lactide composition is separated into an overheads fraction containing light compounds, into a bottom fraction containing heavy compounds and into a side fraction containing the lactide. Good results are in particular obtained, when the first distillation column is operated at a temperature of 100 to 200°C and more preferably of 120 to 180°C and at a pressure of 1 to 50 kPa and more preferably of 1 to 10 kPa. While the bottom fraction of the second distillation column is preferably led as purge stream into the third crystallization unit of step d) and/or recycled into the lactide synthesis reactor, the side fraction of the first distillation column is fed as feed into a second distillation column, in which the side fraction of the first distillation step is separated into a L-lactide enriched composition and into a meso-lactide enriched composition. Good results are in particular obtained, when the second distillation column is operated at a temperature of 100 to 200°C and more preferably of 140 to 170°C and at a pressure of 1 to 80 kPa and more preferably of 1 to 10 kPa. While the meso-lactide enriched composition is produced as overheads fraction and the L-lactide enriched composition is produced as side fraction, the bottom fraction of the second distillation column is preferably led as purge stream into the third crystallization unit of step d) and/or recycled into the lactide synthesis reactor. Each of the first as well as of the second distillation column comprises at least one structured packing bed, wherein the first distillation column comprises preferably 2 to 5 and more preferably 3 structured packing beds, whereas the second distillation column comprises at least one structured packing bed, preferably 2 to 6 structured packing beds and more preferably 4 structured packing beds, wherein the L-lactide enriched composition is preferably withdrawn from the second distillation column as side fraction between the third and fourth bed, seen from the top to the bottom of the distillation column. Furthermore, it is preferred that each of the first and second distillation column is connected with a condenser and a reboiler. While the condenser is connected with the overheads outlet for the respective overheads fraction of the respective distillation column and comprises one outlet for liquid, from which a recycle line leads back into the upper part of the respective distillation column for refluxing a portion of the condensed overheads fraction into the upper part of the respective distillation column, the reboiler is connected with the bottom outlet for the bottom fraction of the respective distillation column and comprises one outlet for vapor, from which a recycle line leads back into the lower part of the distillation column for refluxing a portion of the bottom fraction having been evaporated in the reboiler into the lower part of the respective distillation column.

This embodiment is particularly suitable, when the crude lactide composition contains comparable high amounts of oligomers, such as lactic acid oligomers, for instance if the crude lactide composition contains at least 10% by weight of oligomers or preferably at least 3% by weight of oligomers.

It is preferred that the one or more distillation steps are performed so that the meso-lactide enriched composition contains 70 to 78% by weight and more preferably 75 to 78% by weight of meso-lactide, less than 28% by weight and more preferably less than 21% of L-lactide and less than 4% by weight and more preferably less than 1% of impurities, whereas it is preferred that the one or more distillation steps are performed so that the L-lactide enriched composition contains 91 to 96% by weight and more preferably 94 to 96% by weight of L-lactide, less than 6% by weight and more preferably less than 4% of meso-lactide and less than 3% by weight and more preferably less than 2% of impurities. Again, meso-lactide enriched composition means in accordance with the present invention that the respective composition produced during the separation step b) has a higher content of meso-lactide than the crude lactide composition fed into the separation step b). In other words, if the crude lactide composition fed into the separation step b) comprises 15% by weight of meso-lactide based on the total content of lactide, the meso-lactide enriched composition contains more than 15% by weight of meso-lactide based on the total content of lactide. The same is valid analogously for the L-lactide enriched composition.

Thereafter, the meso-lactide enriched composition is purified by crystallization in step c), whereas the L-lactide enriched composition is purified by crystallization in step d).

As set out above, the meso-lactide enriched composition is preferably obtained in the separation step b) as overheads composition, i.e. as vapor composition, of a distillation column. Therefore, it is preferred that the meso-lactide enriched composition is condensed, before being fed as liquid composition into the at least one crystallization step c).

In accordance with the present invention, the purification conducted in step c) for producing the purified meso-lactide enriched composition comprises at least one crystallization step. In principle, the present invention is not particularly limited concerning the kind of crystallization used in step c). Thus, the crystallization step may be any crystallization step, such as a static crystallization step or a dynamic crystallization step, such as a falling film crystallization step or a suspension crystallization step. Preferably, the at least one crystallization step is a melt crystallization step, i.e. a crystallization step, which is performed from the liquid meso-lactide enriched composition without addition of further components, such as for examples solvents. The (melt) crystallization may be performed in the form of a layer crystallization or in the form of a suspension crystallization. For performing a layer crystallization, typically a cooled surface is introduced into the liquid of the melt to be crystallized. Thereafter, a crystal layer enriched in the meso-lactide forms on the cooled surface and may then be separated from the remaining melt. The crystalline enriched meso-lactide thus obtained may be molten again. Subsequently, this operation may be repeated as often as desired in order to increase the purity and the yield. Good results are, however, in particular obtained when the purification performed in step c) comprises at least one static (melt) crystallization step, such as one, two or more static (melt) crystallization steps. Thus, it is preferred that step c) is performed in a first crystallizer unit, which comprises two or more parallel static crystallizers. Static crystallization has the advantage that it economically purifies compounds, which are contained in the crystallization liquid in comparable high amounts. During the static crystallization, the liquid phase is not moved and thus the crystals are formed and grown in a static liquid phase. More specifically, a typical static crystallizer comprises a plurality of walls, such as plates, or tubes or finned tubes which can be cooled and heated by circulating a heat transfer fluid through the interior of the plates. At the beginning, the static crystallizer is filled with liquid or melt, respectively, of the meso-lactide enriched composition so that the plates contact the liquid mixture. Then, the plates of the static crystallization vessel are cooled to a temperature below the equilibrium freezing temperature of the liquid mixture so that crystals enriched in meso-lactide are formed and deposited on the cooled outer surfaces of the plates. After completion of the crystallization, the remaining liquid mixture is completely removed from the static crystallizer, the cooling of the plates is terminated and optionally the plates are heated so that the crystal layers formed on the outer surfaces of the plates melt, before the melt is removed from the crystallization vessel in order to obtain the purified meso-lactide enriched composition. In order to increase the purity of the meso-lactide the crystal layers may be sweated by gently heating them to a temperature close to the melting temperature of the meso-lactide in order to partially melt the crystals, before melting them.

Good results are in particular obtained, when the at least one crystallization step c) is performed at a crystallization temperature of 0 to 150°C and more preferably of 0 to 120°C with ramping rate of less than 1°C/min., preferably of less than 0.1°C/min and more preferably less than 0.05°C/min.

Preferably, each of the at least one crystallization step c) comprises one to eight static crystallization stages and more preferably two to six, such as three or four, static crystallization stage.

In accordance with the present invention, the meso-lactide enriched composition is subjected in step c) in a first crystallization unit, which comprises two or more parallel crystallizers. In dependency of the meso-lactide content of the crude lactic acid composition used as starting material in the process of the present invention, more or less amount of meso-lactide enriched composition is obtained in step b). Consequently, in dependency of the meso-lactide content of the crude lactic acid composition used as starting material in the process of the present invention, all of the meso-lactide enriched composition is subjected in step c) in the first crystallization unit to at least one crystallization step in only one of the two or more parallel crystallizers or the meso-lactide enriched composition is subjected in step c) in the first crystallization unit to at least one crystallization step in at least two or even all of two or more parallel crystallizers. In the latter case, at least a portion of the meso-lactide enriched composition is subjected in step c) in the first crystallization unit to at least one crystallization step in one of the two or more parallel crystallizers, wherein at least one other portion of the meso-lactide enriched composition is subjected in the first crystallization unit to at least one crystallization step in at least one other of the two or more parallel crystallizers. The mother liquors being obtained in any of the two or more parallel crystallizers is preferably led to the third crystallization unit of step f).

Also concerning the kind of crystallization used in step d) for purifying the L-lactic enriched composition, the present invention is not particularly limited. More specifically, the crystallization step d) may be any crystallization step, preferably melt crystallization step, such as a static (melt) crystallization step or a dynamic (melt) crystallization step, such as a falling film (melt) crystallization step or a suspension (melt) crystallization step. Good results are, however, in particular obtained, when the purification performed in step d) comprises at least one dynamic (melt) crystallization step and more preferably at least one falling film (melt) crystallization step, i.e. it is preferred that step d) is performed in a second crystallization unit, which comprises at least one falling film crystallizer. In contrast to static crystallization, the liquid phase is during the dynamic crystallization not moved or agitated. Dynamic crystallization and in particular falling film crystallization has the advantage that it economically purifies compounds, which are contained in the crystallization liquid in comparable low amounts.

Good results are in particular obtained, when the at least one crystallization step d) is performed at a crystallization temperature of 0 to 150°C and more preferably of 40 to 120°C with ramping rate of less than 1°C/min.

Preferably, the at least one dynamic crystallization step d) comprises one to eight dynamic crystallization stages and more preferably two to five, such as three, dynamic crystallization stage. Particularly preferably, the at least one dynamic crystallization step comprises one to eight falling film crystallization stages and most preferably two to five, such as three, falling film crystallization stages.

In a further development of the idea of the present invention, it is proposed that a portion of the mother liquor produced in step d) is recycled as side stream into the at least one distillation column of step b) and more specifically, if two subsequent distillation steps are performed in step e), into the second distillation column.

In accordance with the present invention, in step e) a polymerization composition comprising at least a portion of the L-lactide enriched composition obtained in step d) is polymerized in a polymerization reactor unit to a crude polylactic acid composition. Preferably, the polymerization composition contains at least a portion of the purified L-lactide enriched composition obtained in step d) and also at least a portion of the purified meso-lactide enriched composition obtained in step c). Thus, the polymerization composition may comprise as lactide component only the L-lactide enriched composition, a mixture of the L-lactide enriched composition and meso-lactide enriched composition or a mixture of the L-lactide enriched composition, meso-lactide enriched composition and other added lactide, such as D-lactide or only the meso-lactide enriched composition.

Good results are in particular obtained, when the polymerization composition further comprises at least one catalyst. Principally, the present invention is not particularly limited concerning the chemical nature of the used catalyst. In particular, good results are obtained, if the catalyst is at least one organometallic compound. Good results are in particular obtained, when the catalyst is at least one organometallic compound comprising a metal selected from the group consisting of magnesium, titanium, zinc, aluminum, indium, yttrium, tin, lead, antimony, bismuth and any combination of two or more of the aforementioned metals. The at least one organometallic compound preferably comprises as organic residue a residue selected from the group consisting of alkyl groups, aryl groups, halides, oxides, alkanoates, alkoxides and any combination of two or more of the aforementioned groups. More preferably, the catalyst is at least one organometallic compound comprising as metal aluminum and/or tin. Still more preferably, the catalyst is at least one organometallic compound being selected from the group consisting of tin octoate, tetraphenyl tin, butyltin trimethoxide, dibutyltin oxide, aluminum isopropoxide, AI(O-i-Pr)p with 1≤p≤3, Et3-pAl(O(CH2)2X)p with 1≤p≤3, α, β, γ, δ, ε tetra-phenylporphinato aluminium (TPPIAIX) and any combination of two or more of the aforementioned compounds. Particularly suitable as catalyst is tin octoate, such as tin(II) 2-ethylhexanoate.

Preferably, the catalyst content in the polymerization composition is 10 to 10,000 ppm and more preferably 50 to 1,000 ppm.

In accordance with a further particularly preferred embodiment of the present invention, the polymerization composition used in step e) contains at least one initiator and more preferably together with the aforementioned at least one catalyst. The at least one initiator is preferably a hydroxy compound and more preferably a hydroxy compound being selected from the group consisting of monohydroxy compounds, dihydroxy compounds, trihydroxy compounds, tetrahydroxy compounds and any combination of two or more of the aforementioned compounds. By the functionality of the at least one hydroxy compound, the design of the resulting copolymer can be adjusted. If a monohydroxy compound is used, a linear copolymer will be produced, whereas branched copolymers may be produced by using one or more dihydroxy compounds, trihydroxy compounds and/or tetrahydroxy compounds. Good results are in particular obtained, when the at least one initiator is selected from the group consisting of 2-ethyl hexanol, 1-decanol, C₁₀-C₂₀-monohydroxy fatty alcohols, benzyl alcohol, p-phenylbenzyl alcohol, ethylene glycol, propylene glycol, butane-1 ,4-diol, polyethylene glycol) with a weight average molecular weight of 200 to 10,000 g/mol, 2-hydroxymethyl-1 ,3-propane, glycerol, polyglycerol with a weight average molecular weight of 100 to 1,000 g/mol, trihydroxybenzene (phloroglucinol), trimethylolpropane and its dimer, pentaerythritol and its dimers and any combination of two or more of the aforementioned compounds.

Preferably, the initiator content in the polymerization composition is 0.1 to 50 meq or less than 0.1 to 50 mmol/kg, respectively, and more preferably 0.5 to 40 meq or mmol/kg, respectively.

Good results are in particular obtained, when the polymerization composition contains 0 to 100% by weight of L-lactide, 0 to 100% by weight of meso-lactide, 10 to 10,000 ppm of catalyst and 0.1 to 50 meq of initiator. Even more preferably, the polymerization composition contains 70 to 100% by weight of L-lactide, 0 to 30% by weight of meso-lactide, 50 to 1,000 ppm of catalyst and 0.5 to 40 meq of initiator.

The present invention is not particularly limited concerning the kind of reactor, in which the polymerization of step e) is performed. Preferably, the polymerization is performed in step e) in at least one loop reactor and/or in at least one plug flow reactor, i.e. it is preferred that the polymerization reactor used in step e) comprises at least one loop reactor and/or at least one plug flow reactor and preferably a loop reactor and downstream thereof a plug flow reactor.

In order to remove the content of volatile impurities, such as of unreacted lactide, from the crude polylactic acid composition so as to obtain a final concentration of volatile impurities of preferably less than at least 0.5% by weight and more preferably less than 0.3% by weight, it is proposed in a further development of the idea of the present invention that the crude polylactic acid composition obtained in step e) is subjected to at least one devolatilization step so as to obtain a devolatilized polylactic acid composition and a condensed vapor composition. Good results are in particular obtained, when the at least one devolatilization step is conducted at elevated temperature e.g. between 190 and 230°C and at a reduced pressure of e.g. below 5 mbar (absolute). For example, a two-stage devolatilization process may be performed, in order to obtain the required degree of lactide removal and thus to obtain a polymer having the required quality. In order to stop the polymerization reaction, an inhibitor is preferably added to the polymer product at the end of the polymerization and before or after the first devolatilization step. In particular, the addition of one or more efficient inhibitor additives at the end of the polymerization reaction is preferred for an efficient devolatilization. Before the first devolatilization step, between the first and second devolatilization step or after the second devolatilization step additives and/or other polymers may be mixed and/or blended in one or more units for mixing and/or blending additives into the product composition in order to improve the mechanical, rheological and/or thermal properties of the final polymer product.

While the devolatilized polylactic acid composition may be withdrawn as product or may be first further purified, preferably at least a portion of the vapor composition obtained in the at least one devolatilization step is, optionally after condensation, recycled into at least one of the third crystallization unit, of the polymerization reactor unit and of the optional, but preferred dewatering unit, which is connected with the oligomerization unit, which is connected with the lactide synthesis reactor.

More preferably, a portion of the vapor composition obtained in the at least one devolatilization step is, optionally after condensation, recycled into the third crystallization unit, whereas another portion of the vapor composition obtained in the at least one devolatilization step is recycled into the polymerization reactor unit and preferably still another portion of the vapor composition obtained in the at least one devolatilization step is recycled into the dewatering unit.

As set out above, the crude polylactic acid composition obtained in step e) or the devolatilized polylactic acid composition obtained after subjecting the crude polylactic acid composition to at least one devolatilization step may be further purified, such as preferably by subjecting the crude polylactic acid composition or the devolatilized polylactic acid composition, respectively, in a fourth crystallization unit to at least one crystallization step so as to produce a purified polylactic acid composition.

Moreover, the final polymer product composition may be cooled in a cooler and then pressed through a granulator or pelletizer, respectively, or through another forming unit.

According to a particular preferred embodiment of the present patent application, it is preferred that the polylactic acid produced during the polymerization step e) has a number average molecular weight of at least 5,000 g/mol, preferably of at least 15,000 g/mol, more preferably of at least 25,000 g/mol, yet more preferably at least 35,000 g/mol and most preferably at least 45,000 g/mol. The upper limit for the number average molecular weight of the polylactic acid produced during the ring-opening-polymerization is preferably 110,000 g/mol, but may be also 90,000 g/mol or 80,000 g/mol. Suitable ranges for the number average molecular weight of the polylactic acid produced during the ring-opening-polymerization may be for instance 10,000 to 20,000 g/mol, 20,000 to 30,000 g/mol, 30,000 to 50,000 g/mol or 50,000 to 80,000 g/mol.

In accordance with the present invention, the number- and weight-average molecular weight (Mₙ and M_{w}) of polymers is determined by gel permeation chromatography using a poly(methyl methacrylate) standard and a sample concentration of 1 to 5 mg/ml in 1ml HFIP depending on the sample's molecular weight, wherein the column temperature is 40 °C, the temperature of the RI-Detector (refractive index) is 40 °C and the flow rate 1 ml/min. As instrument, (GPC Viscotek TDA max from Malvern Panalytical, UK equipped with a Viscotek VE 2001 solvent/sample module, a precolumn HFIP guard (50 mm length and 8 mm internal diameter), two columns (Viscotek HFIP6000M and HFIP3000, Viscotek, Switzerland; 300 mm length and 8 mm internal diameter), and a triple detector Viscotek TDA 305 (RI, UV and viscosimeter) may be used. The calibration curve may be constructed using poly(methylmethacrylate) (PMMA) standard (Mn, max = 50,352 g/mol and Ð of 1.023).

The polydispersity index, i.e. the ratio of Mw/Mn, of the polylactic acid produced during the polymerization step e) may be preferably 1 to 3, more preferably 1 to 2 and most preferably 1 to 1.5.

In a further development of the idea of the present invention it is suggested that the polylactic acid produced during the ring-opening-polymerization has a yellowness index below 40, preferably below 30, more preferably below 15, even preferably below 10, yet more preferably below 5 and most preferably less than 3. The yellowness index is measured in accordance with the present invention in accordance with ASTM E313.

In accordance with another aspect, the present invention relates to a plant for producing polylactic acid from lactic acid, wherein the plant comprises:
i) a lactide synthesis reactor comprising an inlet line and an outlet line for a crude lactide composition comprising at least meso-lactide and L-lactide,
ii) at least one distillation column comprising an inlet line for the crude lactide composition, an outlet line for a meso-lactide enriched composition and an outlet line for a L-lactide enriched composition,
iii) a first crystallization unit comprising an inlet line being connected with the outlet line for the meso-lactide enriched composition of the at least one distillation column and an outlet line for purified meso-lactide enriched composition, wherein the first crystallizer unit comprises two or more parallel crystallizers,
iv) a second crystallization unit comprising an inlet line being connected with the outlet line for the L-lactide enriched composition of the at least one distillation column and an outlet line for purified L-lactide enriched composition,
v) a polymerization reactor unit comprising an inlet line for a polymerization composition, which is connected at least with the outlet line of the second crystallization unit, wherein the polymerization reactor unit further comprises an outlet line for crude polylactic acid composition and
vi) a third crystallization unit, wherein the third crystallization unit comprises an inlet being connected with at least one of an outlet line of the lactide synthesis reactor, of an outlet line of the at least one distillation column, of an outlet line of the first crystallization unit and of an outlet line of the second crystallization unit.

The inlet line for the crude lactide composition of the at least one distillation column may be directly connected with the outlet line for crude lactide composition comprising at least meso-lactide and L-lactide of the lactide synthesis reactor, but preferably a condenser is provided between the at least one distillation column and the lactide synthesis reactor, wherein the inlet line for the crude lactide composition of the at least one distillation column is connected with an outlet line of the condenser, wherein the outlet line for crude lactide composition comprising at least meso-lactide and L-lactide of the lactide synthesis reactor is connected with an inlet line of the condenser.

Good results are in particular obtained, when the inlet line of the third crystallization unit is connected with at least two, more preferably at least three and most preferably all of an outlet line of the lactide synthesis reactor, of an outlet line of the at least one distillation column, of an outlet line of the first crystallization unit and of an outlet line of the second crystallization unit.

Preferably, the third crystallization unit comprises at least one static crystallizer.

In a further development of the idea of the present invention, it is proposed that the third crystallization unit comprises an outlet line, which is connected with the at least one distillation column.

In accordance with a further particularly preferred embodiment of the present invention, the plant further comprises an oligomerization reactor comprising an inlet line and an outlet line, wherein the outlet line of the oligomerization reactor is connected with the inlet line of the lactide synthesis reactor, and wherein the plant preferably further comprises a dewatering unit comprising an inlet line for crude lactide composition and an outlet line being connected with the inlet line of the oligomerization reactor.

Good results are in particular obtained, when the plant comprises two subsequent distillation columns. While the first distillation column comprises an inlet line being connected with the outlet line of the lactide synthesis reactor or with the outlet line of a condenser comprising the outlet line and an inlet line being connected with the outlet line of the lactide synthesis reactor, the first distillation column further comprises an overheads outlet line, a bottom outlet line and a side outlet line. The side outlet line of the first distillation column is preferably connected with the inlet line of the second distillation column, which further comprises an overheads outlet line, a bottom outlet line and a side outlet line. While the overheads outlet line is preferably connected with the inlet line for the meso-lactide enriched composition of the first crystallization unit, the side outlet line of the second distillation column is preferably connected with the inlet line for the L-lactide enriched composition of the second crystallization unit.

Moreover, it is preferred that the first crystallizer unit comprises two or more parallel static crystallizers and/or that the second crystallization unit comprises at least one falling film crystallizer.

In accordance with a further particularly preferred embodiment of the present invention, the second crystallization unit comprises an outlet line, which is connected with an inlet line of the second distillation column.

In a further development of the idea of the present invention, it is suggested that the polymerization reactor unit comprises at least one loop reactor and/or at least one plug flow reactor and preferably a loop reactor and downstream thereof a plug flow reactor.

In accordance with the present invention, the polymerization reactor unit comprising an inlet line for a polymerization composition, which is connected at least with the outlet line of the second crystallization unit. Preferably, the inlet line for polymerization composition of the polymerization reactor unit is further connected with the outlet line of the first crystallization unit, with an inlet line for catalyst and preferably also with an inlet line for initiator.

Preferably, the plant further comprises at least one devolatilizer comprising an inlet line being connected with an outlet line of the polymerization reactor unit, wherein the at least one devolatilizer further comprises a vapor outlet line and a liquid outlet line. The vapor outlet line of the at least one devolatilizer is connected with of at least one of a purge outlet line of the the third crystallization unit, of an inlet line of the polymerization reactor unit and of an inlet line of the second crystallization unit.

In accordance with a further particularly preferred embodiment of the present invention, the plant further comprises a fourth crystallization unit, which comprises an inlet line being connected with the outlet line for crude polylactic acid composition of the polymerization reactor unit and/or with the liquid outlet line of the at least one devolatilizer, wherein the fourth crystallization unit further comprises an outlet line for purified polylactic acid composition.

Subsequently, the present invention is described by means of illustrative, but not limiting figures, in which:

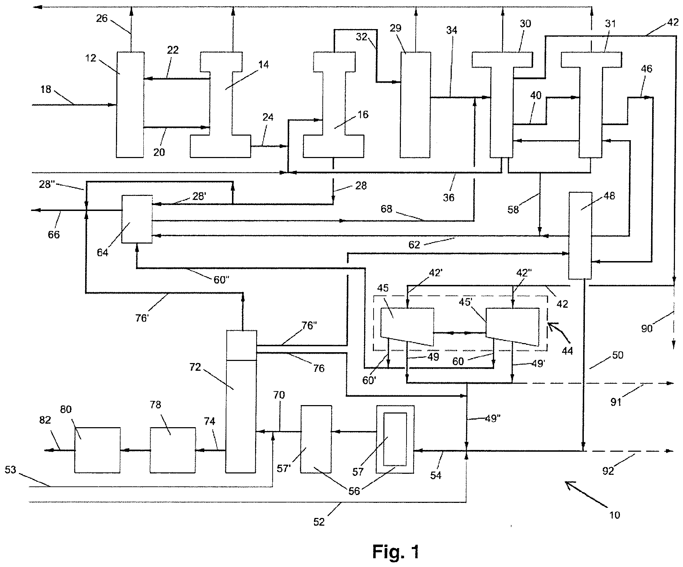

- Fig. 1: shows a schematic view of the plant in accordance with one embodiment of the present invention.

The plant 10 shown in figure 1 comprises, in series, a dewatering unit 12, an oligomerization reactor 14 and a lactide synthesis reactor 16. While the dewatering unit 12 comprises an inlet line 18 for lactid acid, one outlet of the dewatering unit 12 is connected with the inlet of the oligomerization reactor 14 by line 20, whereas the oligomerization reactor 14 is further connected via the return line 22 with the dewatering unit 12 and via line 24 with the inlet of the lactide synthesis reactor 16. Moreover, the dewatering unit 12 comprises a water outlet line 26, whereas the lactide synthesis reactor 16 comprises a purge line 28. Downstream of the lactide synthesis reactor 16, a condenser 29 and two distillation columns 30, 31 are arranged. While the outlet of the lactide synthesis reactor 16 is connected with the inlet of the condenser 29 via line 32, the outlet of the condenser 29 is connected with the inlet of the first distillation column 30 via line 34, the first distillation column 30 is connected via a return line 36 with the lactide synthesis reactor 16 and via line 40 with the second distillation column 31. The second distillation column 31 comprises at its overhead a line 42, from which a withdrawal line 90 splits off, being connected with a first crystallization unit 44, which comprises two parallel static crystallizers 45, 45', which are connected with each other by a connection line 47. Each of the two parallel static crystallizers 45, 45' is connected with a line 42', 42" with line 42. Furthermore, the second distillation column 31 comprises at its side a line 46 being connected with a second crystallization unit 48, which is a falling film crystallizer 48. Each of the two parallel static crystallizers 45, 45' of the first crystallization unit 44 comprises an outlet line 49, 49', which combine to outlet line 49", from which a withdrawal line 91 splits off, and also the second crystallization unit 48 comprises an outlet line 50, from which a withdrawal line 92 splits off, wherein the outlet lines 49" and 50 combine with a catalyst inlet line 52 to the inlet line 54 leading into the polymerization reactor unit 56. In addition, the second distillation column 31 comprises a purge line 58, each of the two parallel static crystallizers 45, 45' of the first crystallization unit 44 comprises a purge line 60, 60' combining to the purge line 60" as well as the second crystallization unit 48 comprises a purge line 62, which all lead into a third crystallization unit 64. The purge line 28 splits upstream of the third crystallization unit 64 into a line 28' leading into the third crystallization unit 64 and into bypass line 28" leading into the purge outlet line 66. The third crystallization unit 64 further comprises a purge outlet line 66 as well as a return line 68 leading back to the first distillation column 30. The polymerization reactor unit 56 comprises, in series, a loop reactor 57 and a plug flow reactor 57', which in turn comprises an outlet line 70, into which a catalyst inhibitor line 53 leads, wherein the outlet line 70 leads into a devolatilizer 72, which comprises a liquid outlet line 74 and three condensed vapor outlet lines 76, 76', 76". While one of the condensed vapor outlet lines 76 leads back into the outlet line 49" of the first crystallization unit, another condensed vapor outlet lines 76' leads into the purge outlet line 66 and the third of the condensed vapor outlet lines 76" leads into the second crystallization unit 48. The liquid outlet line 74 of the devolatilizer 72 leads into a pelletizer 78 and from there into a fourth crystallization unit 80, from which pure polylactic acid is withdrawn via the product outlet line 82 from the plant 10.

During the operation of the plant 10, lactic acid is continuously fed via the inlet line 18 into the dewatering unit 12, in which the lactic acid is dewatered. Dewatered lactic acid is led via line 20 into the oligomerization reactor 14, in which the lactic acid is pre-polymerized so as to produce a lactic acid oligomer, whereas the water having been separated from the lactic acid in the dewatering unit 12 is withdrawn therefrom through line 26. The lactic acid oligomer is led via line 24 into the lactide synthesis reactor 16, in which the lactic acid oligomer is depolymerized into a crude lactide composition, which typically comprises meso-lactide, L-lactide and D-lactide. While a purge stream is withdrawn from the lactide synthesis reactor 16 via line 28, the crude lactide composition is led via line 32 into the condenser 29, in which the crude lactide composition is condensed, before the condensed crude lactide composition is led via line 34 into the first distillation column 30. In the first distillation column 30, lights are separated from the lactides as overheads composition, whereas remaining lactic acid oligomers are returned as bottom composition via line 36 into the lactide synthesis reactor 16 and the pre-purified lactide composition is led as side stream of the first distillation column 30 via line 40 into the second distillation column 31. The pre-purified lactide composition is separated in the second distillation column 31 into an overheads composition, into a side composition and into a bottom composition, wherein the overheads composition is the meso-lactide enriched composition and the side composition is the L-lactide enriched composition. While the meso-lactide enriched composition is fed via line 42 into the first crystallization unit 44, the L-lactide enriched composition is fed via line 46 into the second crystallization unit 48 or falling film crystallizer 48, respectively. The meso-lactide enriched composition is purified by crystallization, in dependency form the amount of meso-lactide enriched composition obtained on the lactide synthesis reactor 16 in relation to L-lactide, only in one or in both of the parallel crystallizers 45, 45' of the first crystallization unit 44 so as to obtain a purified meso-lactide enriched composition, whereas the L-lactide enriched composition is purified by crystallization in the first falling film crystallizer 48 of the second crystallization unit 48 so as to obtain a purified L-lactide enriched composition. The purified crystals of the purified L-meso enriched composition and of the purified L-lactide enriched composition are withdrawn from the first and second crystallization unit 44 and 48, are combined and are led via the inlet line 54, into which the catalyst inlet line 52 leads to add catalyst to the mixture of the purified L-meso enriched composition and of the purified L-lactide enriched composition, into the polymerization reactor unit 56. The lactides are (co)polymerized in the polymerization reactor unit 56 or in the loop reactor 57 and plug flow reactor 57', respectively, to a crude polylactic acid composition, which is via line 70, into which the catalyst inhibitor line 53 leads to add catalyst inhibitor to the polymerization composition, led into the devolatilizer 72 and is devolatilized therein into a liquid composition and into a condensed vapor composition. While the liquid composition is pelletized in the pelletizer 78 and further purified by crystallization in the fourth crystallization unit 80 and then withdrawn from the plant via the product outlet line 82, the condensed vapor stream being obtained in the devolatilizer 72 is fed via lines 76, 54 back into the polymerization reactor unit 56, via line 76' into the purge line 66 and via line 76" into the second crystallization unit 48. In addition to the purge stream withdrawn via line 28 from the lactide synthesis reactor 16, purge streams are withdrawn via line 58 from the second distillation column 31, via lines 60, 60', 60" from both parallel static crystallizers 45, 45' and via line 62 from the falling film crystallizer 48 of the second crystallization unit 48. All these purge streams are purified by crystallization in the third crystallization unit 64, before a portion thereof is withdrawn via line 66 from the plant 10, whereas a portion of the purified purge streams is recycled via line 68 into the second crystallization unit 48. Partial streams may be withdrawn from the plant through any of the withdrawal lines 90, 91, 92.

### Reference numerals

- 10: Plant
- 12: Dewatering unit
- 14: Oligomerization reactor
- 16: Lactide synthesis reactor
- 18: Inlet line for lactid acid
- 20: Line
- 22: Return line
- 24: Line
- 26: Water outlet line
- 28: Purge line
- 28': Line
- 28": Bypass line
- 29: Condenser
- 30: (First) distillation column
- 31: (Second) distillation column
- 32: Line
- 34: Line
- 36: Return line
- 40: Line
- 42, 42', 42": Line
- 44: First crystallization unit
- 45, 45': Static crystallizer
- 46: Line
- 47: Connection line
- 48: Second crystallization unit / falling film crystallizer
- 49, 49', 49": Outlet line of the first crystallization unit
- 50: Outlet line of the second crystallization unit
- 52: Catalyst inlet line
- 53: Catalyst inhibitor line
- 54: Inlet line to polymerization reactor unit
- 56: Polymerization reactor unit
- 57: Loop reactor
- 57': Plug flow reactor
- 58: Purge line
- 60, 60', 60": Purge line
- 62: Purge line
- 64: Third crystallization unit
- 66: Purge outlet line
- 68: Return line
- 70: Outlet line
- 72: Devolatilizer
- 74: Liquid outlet line
- 76, 76', 76": Condensed vapor outlet line
- 78: Pelletizer
- 80: Fourth crystallization unit
- 82: Product outlet line
- 90: Withdrawal line
- 91: Withdrawal line
- 92: Withdrawal line

## Claims

**1.** A process of producing polylactic acid from lactic acid comprising the steps of:
a) synthesizing in a lactide synthesis reactor a crude lactide composition comprising at least meso-lactide and L-lactide from a crude lactic acid composition,
b) separating from the crude lactide composition in at least one distillation column a meso-lactide enriched composition and a L-lactide enriched composition,
c) subjecting the meso-lactide enriched composition in a first crystallization unit to a purification comprising at least one crystallization step so as to produce a purified meso-lactide enriched composition, wherein the first crystallizer unit comprises two or more parallel crystallizers,
d) subjecting the L-lactide enriched composition in a second crystallization unit to a purification comprising at least one crystallization step so as to produce a purified L-lactide enriched composition,
e) polymerizing in a polymerization reactor unit a polymerization composition comprising at least a portion of the L-lactide enriched composition obtained in step d) to a crude polylactic acid composition, and
f) withdrawing at least one purge stream from at least one of the lactide synthesis reactor, of the at least one distillation column, of the first crystallization unit and of the second crystallization unit, wherein the at least one purge stream is subjected in a third crystallization unit to at least one crystallization step so as to produce a purified purge stream.

**2.** The process in accordance with claim 1, wherein the at least one purge stream is subjected in step f) to at least one eutectic crystallization step, and/or wherein the at least one purge stream is subjected in step f) to at least one static crystallization step and preferably to at least one static eutectic crystallization step.

**3.** The process in accordance with claim 1 or 2, wherein in step f) purge streams are withdrawn from at least two, preferably from at least three and most preferably from all four of the lactide synthesis reactor, of the at least one distillation column, of the first crystallization unit and of the second crystallization unit, wherein all purge streams are subjected in the third crystallization unit to at least one crystallization step.

**3.** The process in accordance with any of the preceding claims, wherein at least a portion of the purified purge stream is recycled into the at least one distillation column.

**4.** The process in accordance with any of the preceding claims, wherein step a) comprises the sub-steps of oligomerizing a crude lactic acid composition so as to produce a lactic acid oligomer composition and then of subjecting the lactic acid oligomer composition in the lactide synthesis reactor to a depolymerization reaction so as to obtain the crude lactide composition, and wherein i) the crude lactide composition is led in step b) into a distillation column, wherein the meso-lactide enriched composition is withdrawn from the distillation column as overheads fraction and the L-lactide enriched composition is withdrawn from the distillation column as side fraction, wherein preferably the bottom fraction is led as purge stream into the third crystallization unit of step d) and/or wherein the bottom fraction is recycled into the lactide synthesis reactor, or wherein ii) the crude lactide composition is led in step b) into a first distillation column, in which the crude lactide composition is separated into an overheads fraction, into a bottom fraction and into a side fraction, wherein the side fraction of the first distillation column is fed as feed into a second distillation column, in which the meso-lactide enriched composition is produced as overheads fraction and the L-lactide enriched composition is produced as side fraction, wherein preferably the bottom fraction of the second distillation column is led as purge stream into the third crystallization unit of step d) and/or wherein the bottom fraction is recycled into the lactide synthesis reactor.

**5.** The process in accordance with any of the preceding claims, wherein step c) is performed in a first crystallizer unit, which comprises two or more parallel static crystallizers, wherein at least a portion of the meso-lactide enriched composition is subjected in step c) in the first crystallization unit to at least one crystallization step in one of the two or more parallel crystallizers, wherein preferably at least one other portion of the meso-lactide enriched composition is subjected in the first crystallization unit to at least one crystallization step in at least one other of the two or more parallel crystallizers.

**6.** The process in accordance with any of the preceding claims, wherein step d) is performed in a second crystallization unit, which comprises at least one falling film crystallizer.

**7.** The process in accordance with any of the preceding claims, wherein the polymerization reactor unit used in step e) comprises at least one loop reactor and/or at least one plug flow reactor and preferably a loop reactor and downstream thereof a plug flow reactor.

**8.** The process in accordance with any of the preceding claims, wherein the crude polylactic acid composition obtained in step e) is subjected to at least one devolatilization step so as to obtain a devolatilized polylactic acid composition and a condensed vapor composition, wherein at least a portion of the vapor composition obtained in the at least one devolatilization step is recycled into at least one of the third crystallization unit, of the polymerization reactor unit and of the second crystallization unit.

**9.** The process in accordance with any of the preceding claims, wherein the crude polylactic acid composition obtained in step e) or the devolatilized polylactic acid composition obtained after subjecting the crude polylactic acid composition to at least one devolatilization step is subjected in a fourth crystallization unit to at least one crystallization step so as to produce a purified polylactic acid composition.

**10.** A plant for producing polylactic acid from lactic acid, wherein the plant comprises:
i) a lactide synthesis reactor comprising an inlet line and an outlet line for a crude lactide composition comprising at least meso-lactide and L-lactide,
ii) at least one distillation column comprising an inlet line for the crude lactide composition, an outlet line for a meso-lactide enriched composition and an outlet line for a L-lactide enriched composition,
iii) a first crystallization unit comprising an inlet line being connected with the outlet line for the meso-lactide enriched composition of the at least one distillation column and an outlet line for purified meso-lactide enriched composition, wherein the first crystallizer unit comprises two or more parallel crystallizers,
iv) a second crystallization unit comprising an inlet line being connected with the outlet line for the L-lactide enriched composition of the at least one distillation column and an outlet line for purified L-lactide enriched composition,
v) a polymerization reactor unit comprising an inlet line for a polymerization composition, which is connected at least with the outlet line of the second crystallization unit, wherein the polymerization reactor unit further comprises an outlet line for crude polylactic acid composition and
vi) a third crystallization unit, wherein the third crystallization unit comprises an inlet being connected with at least one of an outlet line of the lactide synthesis reactor, of an outlet line of the at least one distillation column, of an outlet line of the first crystallization unit and of an outlet line of the second crystallization unit.

**11.** The plant in accordance with claim 10, wherein the inlet line of the third crystallization unit is connected with at least two, more preferably at least three and most preferably all of an outlet line of the lactide synthesis reactor, of an outlet line of the at least one distillation column, of an outlet line of the first crystallization unit and of an outlet line of the second crystallization unit.

**12.** The plant in accordance with any of claims 10 or 11, wherein the third crystallization unit comprises an outlet line, which is connected with the at least one distillation column.

**13.** The plant in accordance with any of claims 10 to 12, which further comprises an oligomerization reactor comprising an inlet line and an outlet line, wherein the outlet line of the oligomerization reactor is connected with the inlet line of the lactide synthesis reactor, and wherein the plant preferably further comprises a dewatering unit comprising an inlet line for crude lactide composition and an outlet line being connected with the inlet line of the oligomerization reactor.

**14.** The plant in accordance with any of claims 10 to 13, which comprises two subsequent distillation columns, wherein a first distillation column comprises an inlet line being connected with the outlet line of the lactide synthesis reactor or with the outlet line of a condenser comprising the outlet line and an inlet line being connected with the outlet line of the lactide synthesis reactor, wherein the first distillation column further comprises an overheads outlet line, a bottom outlet line and a side outlet line, wherein the side outlet line of the first distillation column is connected with the inlet line of a second distillation column, which further comprises an overheads outlet line, a bottom outlet line and a side outlet line, wherein the overheads outlet line is connected with the inlet line for the meso-lactide enriched composition of the first crystallization unit, and wherein the side outlet line is connected with the inlet line for the L-lactide enriched composition of the second crystallization unit, wherein the first crystallizer unit comprises two or more parallel static crystallizers and/or wherein the second crystallization unit comprises at least one falling film crystallizer.

**15.** The plant in accordance with any of claims 10 to 14, which further comprises at least one devolatilizer comprising an inlet line being connected with an outlet line of the polymerization reactor unit, a vapor outlet line and a liquid outlet line, wherein the vapor outlet line of the at least one devolatilizer is connected with an at least one of a purge outlet line of the third crystallization unit, of an inlet line of the polymerization reactor unit and of an inlet line of the second crystallization unit.
